# NEUE EUROPÄISCHE PATENTSCHRIFT

(11) **EP 0 528 817 B2**
(45) Veröffentlichungstag und Bekanntmachung des Hinweises auf die Entscheidung über den Einspruch: **28.10.1998**
(45) Hinweis auf die Patenterteilung: 12.01.1994
(21) Anmeldenummer: 91907670.3
(22) Anmeldetag: 20.04.1991
(51) Int. Cl.: G10K 15/02, B60Q 5/00

(54) **GERÄUSCHERZEUGUNGSVORRICHTUNG**
SOUND GENERATING DEVICE
DISPOSITIF GENERATEUR DE SONS

(30) Priorität: 16.05.1990 DE 9005598 U
(43) Veröffentlichungstag der Anmeldung: 03.03.1993
(73) Patentinhaber: HENNL, Wilhelm, D-86609 Donauwörth (DE)
(72) Erfinder: HENNL, Wilhelm, D-86609 Donauwörth (DE)
(74) Vertreter: Schoppe, Fritz, Dipl.-Ing.
(86) Internationale Anmeldenummer: DE9100328
(87) Internationale Veröffentlichungsnummer: WO9118385

(56) Entgegenhaltungen:
- WO-A-90/13109
- DE-A- 3 420 463
- Diplomarbeit "Einfluss des Fahrzeuginnengeräusches auf das subjektive Beschleunigungsempfinden untersucht an einem Realfahrzeug", von Richard Koch, September 1986.
- Diplomarbeit "Entwicklung eines Simulators zur Erzeugung von wiklichkeitsnahen Kraftfahrzeuggeräuschen in Abhängikeit von Motordrehzahl und Geschwindigkeit", von Walter Huber, Dezember 1975.

## Beschreibung

Die vorliegende Erfindung betrifft eine Geräuscherzeugungsvorrichtung zur Beschallung des Innenraumes oder Fahrerbereiches eines Fahrzeuges, mit einem Geräuschgenerator und zumindest einem dem Geräuschgenerator nachgeschalteten Lautsprecher, der im Innenraum oder Fahrerbereich des Fahrzeuges angeordnet ist, nach dem Oberbegriff des Patentanspruches 1.

Aus der DE-A1 3420463 ist bereits eine gattungsgemäße Geräuscherzeugungsvorrichtung bekannt. Bei dieser bekannten Geräuscherzeugungsvorrichtung wird das von dem Drehzahlsensor erfaßte Drehzahlsignal einer Frequenzumsetzerschaltung zugeführt, die ausgangsseitig mehrere drehzahlproportionale Frequenzsignale erzeugt, von denen eines durch den Fahrer auswählbar und über einen Wahlschalter zu einem Verstärker und einem Lautsprecher im Innenraum des Kraftfahrzeuges zuführbar ist. Diese künstlich erzeugten drehzahl proportionalen Frequenzsignale sollen Geräusche simulieren, die dem Fahrer des Kraftfahrzeuges akustisch das Gefühl vermitteln, einen Sportwagen mit dem für einen Sportwagen typischen Klangverhalten zu fahren, obwohl der Fahrer tatsächlich ein Durchschnittskraftfahrzeug bewegt.

Der Fahrer eines Kraftfahrzeugs und insbesondere ein Berufskraftfahrer ist ständig starken psychischen Belastungen aufgrund der Geschehnisse im Straßenverkehr sowie aufgrund der Bedienung des Fahrzeugs ausgesetzt. Die weiteren Insassen sind aufgrund von Beschleunigungen, Verzögerungen, Stößen und unangenehmen Geräuschen gelegentlich noch stärker psychisch belastet als der Fahrer.

Insbesondere bei Berufskraftfahrern kann sich diese Streßsituation derart verstärken, daß es langfristig zu Erkrankungen des Fahrers kommt. Typische streßbedingte Erkrankungen von Berufskraftfahrern sind Kreislaufleiden. Daher sind Berufskraftfahrer auch einem erhöhten Herzinfarktrisiko ausgesetzt.

In jüngerer Zeit hat man die Bedeutung von Musik und Geräuschen für die Therapie erkannt. Beispielsweise wird verwiesen auf das Manuskript E. Kühn, "Medizin mit gutem Klang", Manuskript des Bayerischen Rundfunks zu der Sendung, Sonntag, 26. Oktober 1986, Bayern 2, 20 Uhr bis 21 Uhr. Aus diesem Manuskript ist es zu entnehmen, daß akustische Reize zur direkten Beeinflußung des vegetativen Nervensystemes eingesetzt werden können. Durch geeignete Wahl der akustischen Reize kann auch die Herzfrequenz eines Patienten gesteigert oder reduziert werden.

In üblichen Kraftfahrzeugen besteht heutzutage die Tendenz, die vom Motor erzeugten Geräusche soweit als möglich zu dämmen. Als Ergebnis hiervon sind Geräusche des Motors im Innenraum insbesondere bei niedrigen Lastzuständen des Motors nicht mehr vernehmbar. Das bei hohen Motordrehzahlen vernehmbare Motorgeräusch zeigt in der Regel ein undifferenziertes, uninteressantes Geräuschbild. Es hat sich jedoch herausgestellt, daß der Fahrer eines Automobiles für sein persönliches Wohlbefinden eine akustische Wahrnehmung oder Rückkopplung des Motors benötigt. Diese fehlt bei derart gut gedämmten Kraftfahrzeugen zumindest im Bereich niedriger Lastzustände des Motors oder in solchen Bereichen, bei denen Außengeräusche die vom Motor erzeugten Geräusche übertreffen.

Um dem Fahrer ein subjektives Wohlbefinden bei dem Fahren eines üblichen Kraftfahrzeuges zu vermitteln, wird versucht, die Auspuffanlage des Kraftfahrzeuges auf einen für den Fahrer angenehmen Klang abzustimmen. Eine derartige Abstimmung geht gelegentlich auf Kosten der Optimierung des Motorverhaltens oder der Motorleistung.

Allgemein treten in üblichen Kraftfahrzeugen verschiedene unangenehme akustische Bereiche in Abhängigkeit von Drehzahl und Last des Motores sowie gegebenenfalls von der gefahrenen Geschwindigkeit auf. Bislang bestand lediglich die Möglichkeit, diesen unangenehmen akustischen Bereichen durch zusätzlichen Schallschutzaufwand zu begegnen. Selbstredend führt dies zu unerwünschten zusätzlichen Gewichten des Kraftfahrzeuges sowie auch zu zusätzlichen Herstellungskosten.

Im Hinblick auf diesen Stand der Technik liegt der vorliegenden Erfindung die Aufgabe zugrunde, eine Geräuscherzeugungsvorrichtung der eingangs genannten Art so weiterzubilden, daß mit dieser eine angenehme und für den Fahrer des Fahrzeuges entspannende akustische Umgebung im Innenraum oder Fahrerbereich eines Fahrzeugs geschaffen werden kann.

Diese Aufgabe wird durch eine Geräuscherzeugungsvorrichtung gemäß Patentanspruch 1 gelöst.

Die Erfindung sieht vor, daß wenigstens ein Lastsensor vorgesehen ist, und daß der Geräuschgenerator durch eine Steuerungsvorrichtung, die ein Computer sein kann, und einen Synthesizer gebildet ist, wobei die Steuervorrichtung derart ausgebildet ist, daß diese den Synthesizer in Abhängigkeit von Betriebsbereichen, die durch das Lastsig nal sowie gegebenenfalls weitere Signale, wie z.B. ein Drehzahlsignal, definiert sind, zum Erzeugen von Geräuschen veranlaßt, die von Betriebsbereich zu Betriebsbereich bzw. von Betriebspunkt zu Betriebspunkt variieren. Bei diesen "Betriebsbereichen" kann es sich um Bereiche von zwei- oder mehrdimensionalen Kennlinienfeldern handeln, die zumindest und eine Achse in Richtung der Last und gegebenenfalls eine Achse in Richtung der Drehzahl aufweisen. Unter dem Begriff "Betriebsbereich" sollen auch Betriebspunkte innerhalb der Kennlinienfelder verstanden werden.

Die erfindungsgemäße Geräuscherzeugungsvorrichtung schafft eine frei wählbare, durch den Fahrer einstellbare Klangumgebung im Fahrerbereich oder Innenraum eines Kraftfahrzeuges.

Der Erfindung liegtdie Erkenntnis zugrunde, daß dem Fahrer eines Kraftfahrzeuges eine für ihn entspannend wirkende, die Belastungszustände des Fahrers aufgrund von Ereignissen im Straßenverkehr abbauende akustische Umgebung dadurch geboten werden kann, daß ein vom Lastzustand eines Antriebsmotores abhängiges Signal von einem Lastsensor erzeugt wird und daß der Geräuschgenerator eine Steuervorrichtung und einen nachgeschalteten Synthesizer aufweist, wobei die Steuervorrichtung den Synthesizer in Abhängigkeit von Betriebsbereichen, die zumindest das Lastsignal und gegebenenfalls auch das Drehzahlsignal umfassen, zum Erzeugen von Geräuschen veranlassen, die von Betriebsbereich zu Betriebsbereich variieren.

Da die jeweils erzeugten Klänge oder Geräusche oder Rhythmen abhängig sind von Drehzahl und Last des Motors sowie gegebenenfalls von weiteren Fahrzustandsparametern oder Motorparametern, ist der Fahrer des Fahrzeugs ständig akustisch mit dem Fahrzustand in einer Rückkopplungsbeziehung, wodurch ihm eine optimierte Handhabung des Fahrzeuges ermöglicht wird.

Die Erfindung bewirkt demgemäß eine akustisch und/oder rhythmisch interessante Umgebung mit einem nach der jeweiligen Fahrsituation differenzierten Klangverhalten, Rhythmus- oder Geräuschbild und dient somit der ergonomischen und akustischen Optimierung des Fahrzeuges sowie der akustischen Erweiterung der Fahrdynamik.

Durch die frei wählbaren Klangstrukturen und Rhythmusstrukturen die mit der erfindungsgemäßen Geräuscherzeugungsvorrichtung kreiert werden können, können unangenehme akustische Bereiche oder Eigenschaften des Fahrzeugs überdeckt werden, so daß der Schallschutzaufwand in Kraftfahrzeugen gegenüber dem Stand der Technik vermindert werden kann.

So braucht es insbesondere nicht einer Optimierung der Auspuffanlage in Hinblick auf den von der Auspuffanlage erzeugten Klang, so daß die Optimierung der Auspuffanlage allein auf die maximale Leistung abgestellt werden kann. Der vom Fahrer erwünschte Innenklang im Fahrzeug wird durch die erfindungsgemäße Geräuscherzeugungsvorrichtung geliefert.

Weiterbildungen der erfindungsgemäßen Geräuscherzeugungsvorrichtung sind in den Unteransprüchen definiert.

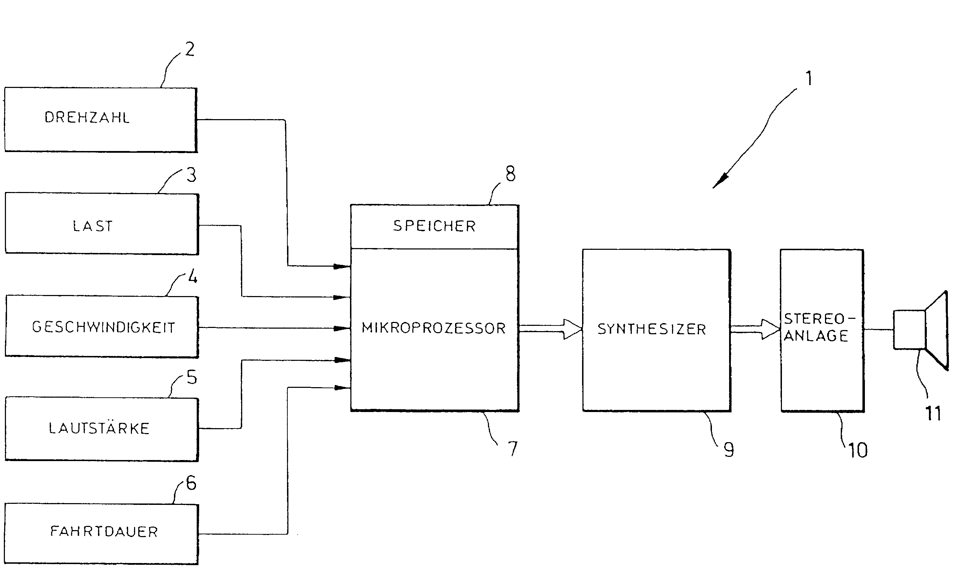

Nachfolgend wird unter Bezugnahme auf die beiliegende Zeichnung eine bevorzugte Ausführungsform der erfindungsgemäßen Geräuscherzeugungsvorrichtung näher erläutert. Es zeigen:

Die einzige Figur ein Blockdiagramm der Struktur der erfindungsgemäßen Geräuscherzeugungsvorrichtung.

Wie in der einzigen Figur gezeigt ist, umfaßt die erfindungsgemäße Geräuscherzeugungsvorrichtung, die zur Beschallung des Fahrerbereiches oder Innenraumes eines Fahrzeuges dient, und die in ihrer Gesamtheit mit dem Bezugszeichen 1 bezeichnet ist, einen Drehzahlsensor 2, einen Lastsensor 3, einen Geschwindigkeitssensor 4, einen Lautstärkesensor 5, der als Mikrophon ausgestaltet sein kann, sowie eine Fahrtdauermeßvorrichtung 6, welche (über nicht gezeigte Analog Digital-Wandler) mit Eingängen eines Mikroprozessors 7 verbunden sind, der mit einem Speicher 8 versehen ist. Der Mikroprozessor 7 steht ausgangsseitig mit einem Synthesizer 9 in Verbindung, der an den Eingang eines Verstärkers einer Stereoanlage 10 eines Kraftfahrzeuges verbunden ist, die ausgangsseitig mit Lautsprechern versehen ist, von denen nur ein Lautsprecher 11 gezeigt ist.

Der Mikroprozessor 7 ist in einer aus dem Bereich der Kraftstoffeinspritzanlagen an sich bekannten Art mit N-dimensionalen Kennlinienfeldern programmiert, die jeweils eine Achse in Richtung der Drehzahl, der Last, der Geschwindigkeit, der Lautstärke und gegebenenfalls der Fahrtdauer haben.

Die Kennlinienfelder sind in dem Speicher 8 abgelegt.

Die Ausgangsgröße des Mikroprozessors ist eine derartige Ansteuerung des Synthesizers in Abhängigkeit von dem Drehzahlsignal, dem Lastsignal, dem Geschwindigkeitssignal, dem Lautstärkesignal und der gemessenen Fahrtdauer, daß für jeden Betriebsbereich, der durch die genannten Signale definiert wird, jeweils ein eigenes Geräusch erzeugt wird, wobei die Tonhöhe der Grundfrequenz des Geräusches und/oder eine Schwebungsfrequenz oder ein Grundrhythmus des Geräusches und/oder der Oberwellengehalt des Geräusches und/oder eine Hüllkurve des Geräusches durch die Bedienungsperson frei wählbar ist. Wie an sich aus dem Bereich der Klangerzeugung mittels Synthesizern bekannt ist, können bei der Hüllkurve die Anstiegszeit und/oder eine Abfallszeit und/oder eine Haltezeit und/oder eine Ausklingzeit durch die Bedienungsperson festgelegt werden.

Bei dem erfindungsgemäßen System wird also der Synthesizer nicht, wie dies üblicherweise der Fall ist, durch eine Tastatur angesteuert, sondern wird in Abhängigkeit von erfaßten Motorzuständen oder Fahrzuständen automatisch angesteuert, wobei jedoch die Zuordnung eines bestimmten Geräusches zu bestimmten Motorbetriebsbereichen oder Fahrtbetriebsbereichen durch die Bedienungsperson oder den Fahrer definiert werden kann.

Zusätzlich zu den genannten Eingangsgrößen für die Kennlinienfelder können durch den Mikroprozessor auch Gradienten als Eingangsgrößen berechnet werden, so beispielsweise die Änderungsgeschwindigkeit des Drehzahlsignales oder die Änderungsgeschwindigkeit des Lastsignales, um den vom Synthesizer erzeugten Klang in Abhängigkeit von diesen Änderungsgeschwindigkeiten zu beeinflussen. Mittels solcher Maßnahmen kann dem Fahrer ein Beschleunigungs- oder Verzögerungszustand des Fahrzeugs akustisch verdeutlicht werden.

Mittels derartiger Maßnahmen ist es möglich, dem Fahrer einen unveränderten Fahrzustand durch einen konstanten Grundrhythmus oder eine konstante Schwebungsfrequenz des erzeugten Klanges darzustellen, währen beispielsweise bei einem Gaswegnehmen oder bei einem Schubbetrieb des Motores die Schwebungsfrequenz oder der Grundrhythmus des Klanges entsprechend verändert wird.

Bei langdauernder Fahrt ermöglicht es die erfindungsgemäße Geräuscherzeugungsvorrichtung zur Beschallung des Innenraumes oder Fahrerbereiches eines Fahrzeuges, bereits ein geringes Beschleunigen oder Verzögern akustisch hervorgehoben zu betonen.

Die erfindungsgemäße Geräuscherzeugungsvorrichtung zur Beschallung des Innenraumes oder Fahrerbereiches eines Fahrzeuges kann derartig ausgebildet sein, daß sie bei Änderungen der Fahrparameter besonders wirksam wird, jedoch bei gleichbleibenden Parametern einen unauffälligen akustischen Hintergrund in Form eines Leitrhythmus bildet.

Die erfindungsgemäße Geräuscherzeugungsvorrichtung zur Beschallung des Innenraumes oder Fahrerbereiches eines Fahrzeuges schafft eine an die jeweilige Fahrtdauer angepaßte akustische Optimierung.

Wenn es sich bei dem Fahrzeug um ein Automobil mit Vergasermotor handelt, kann der Lastzustand des Motores mittels eines Drucksensors an dem Unterdruckanschluß für die Zündwinkelverstellung erfaßt werden. Bei Einspritzmotoren wird innerhalb der Kraftstoffeinspritzvorrichtung ein Lastsignal erzeugt, dessen man sich für die Zwecke der Erfindung bedienen kann. Dieses kann im einfachsten Fall das Ausgangssignal eines Luftmengenmessers der Kraftstoffeinspritzanlage sein.

Jedoch kann auch bei Einspritzmotoren der Lastzustand durch Messen des Unterdruckes ermittelt werden, wie dies üblicherweise bei Vergasermotoren der Fall ist. Das auf diese Weise ermittelte Lastsignal wird der Steuervorrichtung zugeführt.

Bei Fahrzeugen mit einer zentralen Elektroniksteuerung können Steuersignale aus der zentralen Elektroniksteuerung für die Ansteuerung der Steuervorrichtung verwendet werden. Beispielsweise können derartige Signale die Signale über den momentan eingelegten Gang umfassen.

In an sich bekannter Weise kann das Drehzahlsignal aus der Zündfrequenz von Benzinmotoren abgeleitet werden. Das Drehzahlsignal kann bei Einspritzmotoren auch aus der Betriebsfrequenz von Einspritzventilen abgeleitet werden.

Bei Dieselfahrzeugen bedarf es zu diesem Zweck eines eigenen Drehzahlsensors. Die Belastung eines Dieselmotors kann beispielsweise durch die Steuerstellung des Einspritzsystemes erfaßt werden.

Abweichend hiervon bieten sich zur Ableitung von Drehzahl und Last Schwingungs- oder Geräuschaufnehmer an der Einspritzanlage bzw. den Einspritzventilen an. Im Falle von elektronisch gesteuerten Dieseleinspritzanlagen können Drehzahl- oder Lastsignale direkt aus der Einspritzanlage gewonnen werden.

Falls es sich bei dem Fahrzeug um ein Elektrofahrzeug handelt, kann die Belastung aus dem Motorstrom abgeleitet werden, während das Drehzahlsignal von einem Drehzahlsensor geliefert wird.

In Abweichung von dem oben beschriebenen Ausführungsbeispiel kommen als Sensoren für die Drehzahl und für die Last auch Schwingungs- oder Geräuschaufnehmer in Betracht, die am Motorblock oder im Motorraum angeordnet sind. Aus den Ausgangssignalen dieser Sensoren können durch Filterung und geeignete Signalverarbeitung Drehzahlsignale und Lastsignale gewonnen werden.

Häufig erweist sich ein bestimmter Fahrzustand als kritisch, wenn Grenzwerte überschritten oder unterschritten werden. So können das Überschreiten von Höchstdrehzahlen oder das Unterschreiten von Mindestdrehzahlen sowie ein ständiger Voll last betrieb die Lebensdauer des Motors beeinträchtigen. Um den Fahrer über das Überschreiten bzw. Unterschreiten relevanter Grenzwerte zu unterrichten, kann die Steuerung so ausgebildet sein, daß sie bei Überschreiten bzw. Unterschreiten solcher Grenzwerte den Synthesizer entweder abschaltet oder zur Erzeugung von Warngeräuschen oder Hinweisgeräuschen veranlaßt.

Unter dem Begriff "Geräusch" im Sinne der vorliegenden Anmeldung sollen alle Geräuscharten, Klänge und Rhythmen verstanden werden.

## Patentansprüche

1. Geräuscherzeugungsvorrichtung zur Beschallung des Innenraumes oder Fahrerbereiches eines Fahrzeuges, mit
- einem Geräuschgenerator (1 bis 10), und
- zumindest einem dem Geräuschgenerator (1 bis 10) nachgeschalteten Lautsprecher (11), der im Innenraum oder Fahrerbereich des Fahrzeuges angeordnet ist,
- wobei ein Lastsensor (3) zum Erfassen der Last des Antriebsmotores vorgesehen ist, der ausgangsseitig mit dem Geräuschgenerator (7, 8, 9) verbunden ist,
- und der Geräuschgenerator als Steuervorrichtung (7, 8) mit nachgeschaltetem Synthesizer (9) ausgebildet ist, und
- wobei die Steuervorrichtung (7, 8) derart ausgebildet ist, daß diese (7, 8) den Synthesizer (9) in Abhängigkeit von Betriebsbereichen, die wenigstens das durch den Lastsensor (3) erzeugte Lastsignal umfassen, zum Erzeugen von Geräuschen veranlaßt, die von Betriebsbereich zu Betriebsbereich variieren, dadurch gekennzeichnet, daß die von dem Synthesizer (9) erzeugten Geräusche neben einer frei wählbaren Grundfrequenz eine frei wählbare Schwebungsfrequenz oder einen frei wählbaren Rhythmus haben.

2. Geräuscherzeugungsvorrichtung nach Anspruch 1, dadurch gekennzeichnet,
daß ferner ein Drehzahlsensor (2) zum Erfassen der Drehzahl eines Antriebsmotores mit der Steuervorrichtung (7, 8) verbunden ist, und
daß die Betriebsbereiche wenigstens das durch den Drehzahlsensor (2) erzeugte Drehzahlsignal und das durch den Lastsensor (3) erzeugte Lastsignal umfassen.

3. Geräuscherzeugungsvorrichtung nach Anspruch 1 oder 2, dadurch gekennzeichnet,
daß die Steuervorrichtung als Mikrocomputer (7, 8) ausgebildet ist, und
daß der Mikrocomputer (7, 8) so ausgestaltet ist,
daß jedem Betriebsbereich durch eine Bedienungsperson ein frei wählbares Geräusch zugeordnet werden kann.

4. Geräuscherzeugungsvorrichtung nach Anspruch 3, dadurch gekennzeichnet,
daß für jedes Geräusch
- die Tonhöhe der Grundfrequenz des Geräusches und/oder
- eine Schwebungsfrequenz oder ein Grundrhythmus desselben und/oder
- der Oberwellengehalt desselben und/oder
- die Hüllkurve desselben bezüglich einer Anstiegszeit, einer Abfallszeit, einer Haltezeit und/oder einer Ausklingzeit durch die Bedienungsperson festlegbar sind.

5. Geräuscherzeugungsvorrichtung nach einem der Ansprüche 1 bis 4, dadurch gekennzeichnet,
daß ein Mikrophon (5) zum Erfassen der Fahrgeräusche vorgesehen ist, und
daß die Betriebsbereiche ferner von der Fahrgeräuschlautstärke und der Art der Fahrgeräusche abhängen.

6. Geräuscherzeugungsvorrichtung nach einem der Ansprüche 1 bis 5, dadurch gekennzeichnet, daß die Betriebsbereiche in Abhängigkeit von der Änderungsgeschwindigkeit des Drehzahlsignales und/oder des Lastsignales variieren.

7. Geräuscherzeugungsvorrichtung nach einem der Ansprüche 1 bis 6, dadurch gekennzeichnet, daß der Synthesizer (9) ausgangsseitig an den Eingang einer Verstärkeranlage einer in dem Fahrzeug installierten Stereoanlage (10) angeschlossen ist, so daß die Geräusche über die Lautsprecher (11) der Stereoanlage (10) wiedergegeben werden.

8. Geräuscherzeugungsvorrichtung nach einem der Ansprüche 1 bis 7, dadurch gekennzeichnet, daß die Steuervorrichtung (7, 8) den Synthesizer (9) zum Erzeugen von Warngeräuschen oder Hinweisgeräuschen veranlaßt, wenn vorbestimmte Grenzwerte der Bereiche unterschritten oder überschritten werden.

9. Geräuscherzeugungsvorrichtung nach einem der Ansprüche 1 bis 7, dadurch gekennzeichnet, daß die Steuervorrichtung (7, 8) den Synthesizer (9) abschaltet, wenn vorbestimmte Grenzwerte der Bereiche unterschritten oder überschritten werden.

10. Geräuscherzeugungsvorrichtung nach einem der Ansprüche 1 bis 9, dadurch gekennzeichnet, daß die Geräuscherzeugungsvorrichtung Geräusche und/oder Klänge und/oder Rhythmen erzeugt.

11. Geräuscherzeugungsvorrichtung nach einem derAnsprüche 1 bis 10, dadurch gekennzeichnet, daß die Geräuscherzeugungsvorrichtung in einem Gehäuse eines Autoradios integriert ist.

12. Geräuscherzeugungsvorrichtung nach einem derAnsprüche 1 bis 11, dadurch gekennzeichnet, daß die Geräuscherzeugungsvorrichtung derart ausgebildet ist, daß sie bei langdauernder Fahrt bereits ein geringes Beschleunigen oder Verzögern akustisch hervorgehoben betont.

13. Geräuscherzeugungsvorrichtung nach einem derAnsprüche 1 bis 12, dadurch gekennzeichnet, daß die Geräuscherzeugungsvorrichtung derart ausgebildet ist, daß sie bei Änderungen der Fahrparameter besonders wirksam wird, jedoch bei gleichbleibenden Parametern einen unauffälligen akustischen Hintergrund in Form eines Leitrhythmus bildet.

## Claims

1. A sound generating device which serves to produce sound waves in the interior of a vehicle or in the driver's cab, comprising
- a sound generator (1 to 10) and
- at least one loudspeaker (11), which is connected downstream of said sound generator (1 to 10) and which is arranged in the interior of the vehicle or in the driver's cab,
- wherein a load sensor (3) is provided, which is used for detecting the load of the driving engine or driving motor and the output side of which is connected to the sound generator (7, 8, 9),
- wherein the sound generator is constructed as a control device (7, 8) with a synthesizer (9) connected downstream thereof, and
- wherein the control device (7, 8) is constructed in such a way that it (7, 8) causes the synthesizer (9) to generate sounds, dependently upon operating ranges comprising at least the load signal generated by the load sensor (3), which vary from one operating range to another,
characterized in that
the sounds generated by the synthesizer (9) have, in addition to a freely selectable basic frequency, a freely selectable beat frequency or a freely selectable rhythm.

2. A sound generating device according to claim 1, characterized in
that, in addition, a revolution speed sensor (2) for detecting the revolution speed of a driving engine or driving motor is connected to the control device (7, 8), and
that the operating ranges comprise at least the revolution speed signal generated by the revolution speed sensor (2) and the load signal generated by the load sensor (3).

3. A sound generating device according to claim 1 or 2, characterized in
that the control device (7, 8) is constructed as a microcomputer (7, 8), and
that the microcomputer (7, 8) is constructed such that an operator can associate a freely selectable sound with each operating range.

4. A sound generating device according to claim 3, characterized in
that for each sound
- the pitch of the basic frequency of the sound and/or
- a beat frequency or a basic rhythm thereof and/or
- the harmonic content thereof and/or
- the envelope thereof with respect to a rise time, a fall time, a hold time and/or a decay time can be determined by the operator.

5. A sound generating device according to one of the claims 1 to 4, characterized in
that a microphone (5) is provided for detecting the driving noise, and
that the operating ranges additionally depend on the driving noise intensity and on the type of driving noise.

6. A sound generating device according to one of the claims 1 to 5, characterized in
that the operating ranges vary in response to the rate of change of the revolution speed signal and/or of the load signal.

7. A sound generating device according to one of the claims 1 to 6, characterized in
that the synthesizer (9) is, on its output side, connected to the input of an amplifier system of a stereo system (10) installed in the vehicle so that the sounds will be reproduced via the loudspeakers (11) of the stereo system (10).

8. A sound generating device according to one of the claims 1 to 7, characterized in
that the control device (7, 8) will cause the synthesizer (9) to generate warning sounds or notification sounds, if predetermined limit values of said ranges are exceeded or if the values in question fail to reach said limit values.

9. A sound generating device according to one of the claims 1 to 7, characterized in
that the control device (7, 8) will switch off the synthesizer (9), if predetermined limit values of said ranges are exceeded or if the values in question fail to reach said limit values.

10. A sound generating device according to one of the claims 1 to 9, characterized in
that the sound generating device generates sounds and/or tones and/or rhythms.

11. A sound generating device according to one of the claims 1 to 10, characterized in
that the sound generating device is integrated in the housing of a car radio.

12. A sound generating device according to one of the claims 1 to 11, characterized in
that the sound generating device is constructed such that, in the case of long drives, it will acoustically emphasize even minor accelerations or decelerations.

13. A sound generating device according to one of the claims 1 to 12, characterized in
that the sound generating device is constructed such that it will become especially effective in response to changes in the driving parameters, whereas, if no change of parameters takes place, it will provide an unobtrusive acoustic background in the form of a leading rhythm.

## Revendications

1. Dispositif générateur de sons pour la sonorisation de l'espace intérieur ou de la zone de conducteur d'un véhicule, avec
- un générateur de sons (1 à 10), et
- au moins un haut-parleur (11), connecté après le générateur de sons (1 à 10), qui est disposé dans l'espace intérieur ou dans la zone de conducteur du véhicule,
- dans lequel est prévu un détecteur de charge (3), destiné à capter la charge du moteur d'entraînement, qui est relié, du côté sortie, au générateur de sons (7, 8, 9),
- et le générateur de sons se présente sous forme de dispositif de commande (7, 8) à synthétiseur (9) connecté en aval, et
- dans lequel le dispositif de commande (7, 8) se présente de telle manière qu'il fait générer par le synthétiseur (9), en fonction de plages de fonctionnement comportant au moins le signal de charge généré par le détecteur de charge (3), des sons qui varient d'une plage de fonctionnement à l'autre,
caractérisé par le fait que les sons générés par le synthétiseur (9) ont, outre une une fréquence de base pouvant être choisie librement, une fréquence de battement pouvant être choisie librement ou un rythme pouvant être choisi librement.

2. Dispositif générateur de sons suivant la revendication 1, caractérisé par le fait
que, par ailleurs, un détecteur de vitesse de rotation (2) destiné à déterminer la vitesse de rotation d'un moteur d'entraînement est relié au dispositif de commande (7, 8), et
que les plages de fonctionnement comportent au moins le signal de vitesse de rotation généré par le détecteur de vitesse de rotation (2) et le signal de charge généré par le détecteur de charge (3).

3. Dispositif générateur de sons suivant la revendication 1 ou 2, caractérisé par le fait
que le dispositif de commande se présente sous forme de micro-ordinateur (7, 8), et
que le micro-ordinateur (7, 8) est réalisé de telle manière qu'à chaque plage de fonctionnement peut être attribué, par un opérateur, un son pouvant être choisi librement.

4. Dispositif générateur de sons suivant la revendication 3, caractérisé par le fait que pour chaque son peuvent être fixés par l'opérateur:
- la hauteur de son de la fréquence de base du son et/ou
- une fréquence de battement ou un rythme de base de celle-ci et/ou
- la teneur en harmoniques de celle-ci et/ou
- la courbe d'enveloppe de celle-ci pour un temps de montée, un temps de descente, un temps d'arrêt et/ou un temps d'enclenchement.

5. Dispositif générateur de sons suivant l'une des revendications 1 à 4, caractérisé par le fait
qu'il est prévu un microphone (5) destiné à capter les sons de conduite, et
que les plages de fonctionnement dépendent, par ailleurs, de l'intensité des sons de conduite et de la nature des sons de conduite.

6. Dispositif générateur de sons suivant l'une des revendications 1 à 5, caractérisé par le fait que les plages de fonctionnement varient en fonction de la vitesse de changement du signal de vitesse de rotation et/ou du signal de charge.

7. Dispositif générateur de sons suivant l'une des revendications 1 à 6, caractérisé par le fait que le synthétiseur (9) est connecté, du côté sortie, à l'entrée d'une installation d'amplification d'une installation stéréo (10) installée dans le véhicule, de manière que les sons sont reproduits par les haut-parleurs (11) de l'installation stéréo (10).

8. Dispositif générateur de sons suivant l'une des revendications 1 à 7, caractérisé par le fait que le dispositif de commande (7, 8) fait générer par le synthétiseur (9) des sons d'avertissement ou des sons d'indication lorsqu'il est descendu au-dessous de valeurs limites prédéterminées des plages ou que celles-ci sont dépassées.

9. Dispositif générateur de sons suivant l'une des revendications 1 à 7, caractérisé par le fait que le dispositif de commande (7, 8) déclenche le synthétiseur (9) lorsqu'il est descendu au-dessous de valeurs limites prédéterminées des plages ou que celles-ci sont dépassées.

10. Dispositif générateur de sons suivant l'une des revendications 1 à 9, caractérisé par le fait que le dispositif générateur de sons génère des bruits et/ ou des sons et/ou des rythmes.

11. Dispositif générateur de sons suivant l'une des revendications 1 à 10, caractérisé par le fait que le dispositif générateur de sons est intégré dans un boîtier d'une radio de voiture.

12. Dispositif générateur de sons suivant l'une des revendications 1 à 11, caractérisé par le fait que le dispositif générateur de sons est réalisé de telle manière que, en cas de conduite de longue durée, il souligne acoustiquement, de manière accentuée, déjà une légère accélération ou un léger ralentissement.

13. Dispositif générateur de sons suivant l'une des revendications 1 à 12, caractérisé par le fait que le dispositif générateur de sons est réalisé de telle manière qu'il devient très actif en cas de modification des paramètres de conduite, mais forme un fond acoustique en forme de rythme conducteur qui passe inaperçu en cas de paramètres inchangés.
